# EUROPEAN PATENT APPLICATION

(11) **EP 2 832 989 A1**
(43) Date of publication of application: **04.02.2015**
(21) Application number: 14178418.1
(22) Date of filing: 24.07.2014
(51) Int. Cl.: F03D 1/06

(54) **A blade for a wind turbine**

(30) Priority: 31.07.2013 AU 2013902841
(71) Applicant: Cheng, Wei Kai, Sydney, NSW 2213 (AU)
(72) Inventor: Cheng, Wei Kai, Sydney, NSW 2213 (AU)
(74) Representative: Beck Greener

(57) **Abstract**

This disclosure relates to a blade for a wind turbine, the blade having a dynamic effective cross-section in use.

## Description

The present invention relates to blade for a wind turbine.

The invention has been developed primarily for use in/with wind turbines and will be described hereinafter with reference to this application. However, it will be appreciated that the invention is not limited to this particular field of use.

Modern wind turbines comprise complex control mechanisms to account for differing operating variables. Specifically, modern wind turbines comprise feathering mechanisms to alter the pitch the blades of the wind turbine so as to vary the cross-section of the blades. For example, during high velocity winds, the controller of the wind turbine may increase the pitch of the blades so as to reduce the force applied to the blades, reduce the rotational velocity of the blades, reduce the lateral force on the wind turbine and the like. Alternatively, during low wind conditions, the controller of the wind turbine may decrease the pitch of the blades.

Furthermore, modern wind turbines further comprise automatic gearboxes so as to be able to provide a substantial constant rotational velocity of the blades of the wind turbine.

However, such control mechanisms are complex to implement, increase the cost to the wind turbines, increase service requirements for the wind turbines and the like.

The present invention seeks to provide a blade for a wind turbine and a turbine which will overcome or substantially ameliorate at least some of the deficiencies of the prior art, or to at least provide an alternative.

It is to be understood that, if any prior art information is referred to herein, such reference does not constitute an admission that the information forms part of the common general knowledge in the art, in Australia or any other country.

According to one aspect of the present invention, there is provided a blade for a wind turbine, the blade having a dynamic effective cross-section in use.

Preferably, the blade is configurable in a first configuration having a first cross-section and a second configuration having a second cross-section, where the first cross-section is greater than the second cross-section.

Preferably, the blade comprises a blade portion and a flap, and the flap is adapted for being positioned with respect to the blade portion in a first position in the first configuration and a second position in the second configuration.

Preferably, the first position and the second position differ in angle.

Preferably, the first position and the second position differ in extension

Preferably, the flap is biased towards the first position.

Preferably, the flap is biased by means of a spring.

Preferably, the blade portion is hingedly coupled to the flap.

Preferably, the blade further comprises a live hinge between the blade portion and the flap.

Preferably, in use, the flap tends towards the second position at increased wind velocity.

Preferably, the flap is located substantially at a trailing edge of the blade portion.

Preferably, the blade further comprises an actuator for positioning the flap.

Preferably, the blade further comprises a control interface operably coupled to the actuator.

According to another aspect of the present invention, there is provided a wind turbine comprising at least one blade having a dynamic effective cross-section in use.

Preferably, the at least one blade comprises an actuator for configuring the cross-section of the blade in use.

Preferably, the wind turbine further comprises a controller operably coupled to the actuator.

Preferably, the controller is adapted to measure wind velocity.

Preferably, the controller is adapted to measure rotational velocity.

Other aspects of the invention are also disclosed.

Notwithstanding any other forms which may fall within the scope of the present invention, a preferred embodiment of the invention will now be described, by way of example only, with reference to the accompanying drawings in which:
Fig. 1 shows a blade for a wind turbine in a first configuration and a second configuration in accordance with an embodiment of the present invention; and
Fig. 2 shows a first and a flap of the blade of Fig. 1 in a first position and one of two second position in accordance with another embodiment of the present invention; and
Fig. 3 shows a wind turbine comprising a plurality of blades of Fig.1 in accordance with another embodiment of the present invention.

It should be noted in the following description that like or the same reference numerals in different embodiments denote the same or similar features.

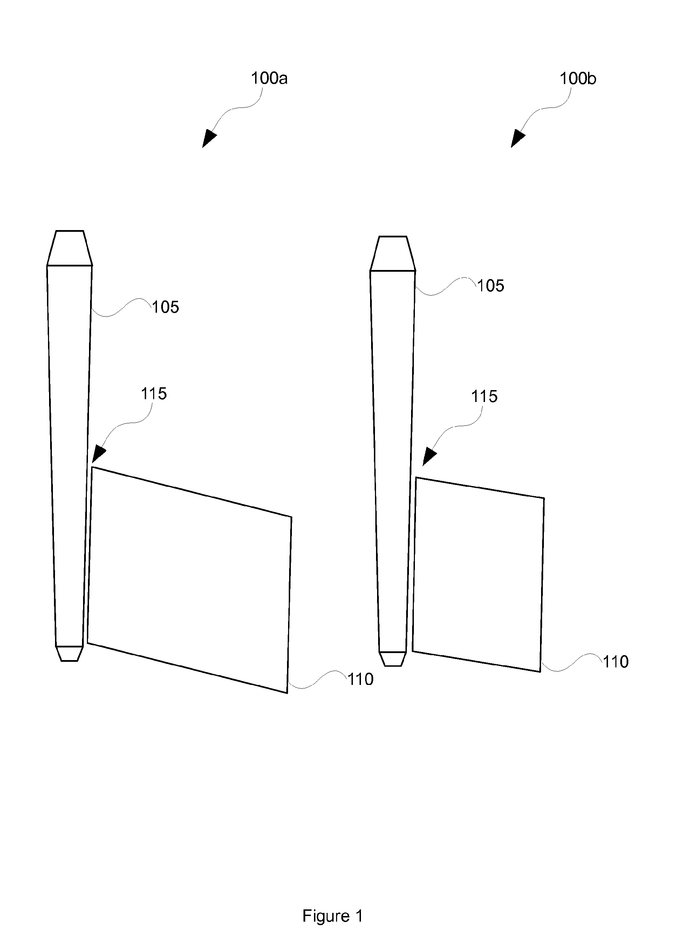

Turning now to figure 1, there is shown a blade 100 for a wind turbine. As will become apparent from the description below, the blade 100 has a dynamic effective cross-section in use so as to be able to accommodate differing operational conditions such as those comprising variations in wind velocity, blade rotational velocity and the like.

It should be noted that the term "cross-section" as referred to herein generally refers to the effective cross-section of the blade 100.

Specifically, in figure 1, there are shown two fontal view configurations of the blade 100. In this regard, the blade 100 comprises a first configuration 100a having a first cross-section and a second configuration 100b having a second cross-section. As is apparent, the first cross-section is greater than the second cross-section.

In this regard, the cross-section of the blade 100 is configurable/dynamic so as to adapt to changes in operating parameters. For example, during low wind velocities, the blade 100 may take on the first configuration 100a so as to increase the effective force acting on the blade 100 wherein, during higher velocities, the blade 100 take on the second configuration 100b so as to reduce the effective force acting on the blade 100. In this manner, the blade 100 is suited for applications including the generation of constant torque 100, such as in the generation of electricity, the reduction of force during high wind velocities, so as to reduce risks of unsafe forces being applied to a wind turbine comprising the blade 100.

It should be noted that the blade 100 may change in cross-section in accordance with other factors as opposed to wind velocity. Such factors include blade 100 rotational velocity, wind consistency, wind turbulence, gearing ratio of the wind turbine generator and the like.

In a preferred embodiment, the blade 100 comprises a blade portion 105 and a flap 110 and wherein the flap 110 is adapted for being positioned with respect to the blade portion 105 so as to vary the effective cross-section of the blade 100.

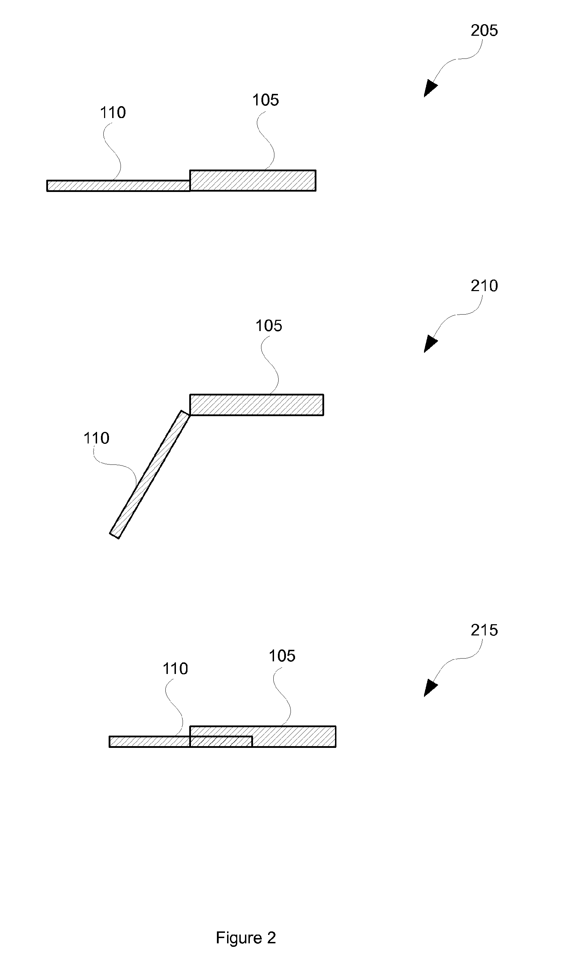

Specifically, referring to figure 2, there is shown the flap 110 in the first position 205. Now, in one embodiment, the first position and the second position differ in angle. For example, there is shown the flap 110 in the second position 210. In this manner, the flap 110 has been deflected away from the blade portion 105. In this embodiment, the flap 110 may be deflected naturally towards the second position by increased wind pressure.

However, in other embodiments, the second position 215 may differ in extension (not shown). For example, the flap 110 may be withdrawn within the blade portion 105. In this embodiment provide advantages in drag reduction, turbulence minimisation and the like. However, as opposed to the embodiment where the flap 110 deflects away from the blade portion 105 described above, in this embodiment, the flap 110 generally requires an actuator to pull the flap 110 within the blade portion 105.

In a preferred embodiment, the flap 110 is biased towards the first position 205. In this manner, the default state of the blade 110 is adapted to maximise wind forced by presenting a greater cross-section. The flap 110 may be biased in any suitable manner, including through the use of a spring (not shown). It should be noted that the blade portion 105 may be hingedly coupled to the flap 110 with the spring being disposed therebetween. However, in other embodiments, the hinge may be a live hinge which naturally tends towards the first position to 205.

In this manner, with the flap 110 being biased towards the first position 205, at greater wind force, the flap 110 is forced towards the second configuration 210. In this manner, as the wind force increases, the presented effective cross-section of the blade 100 decreases accordingly.

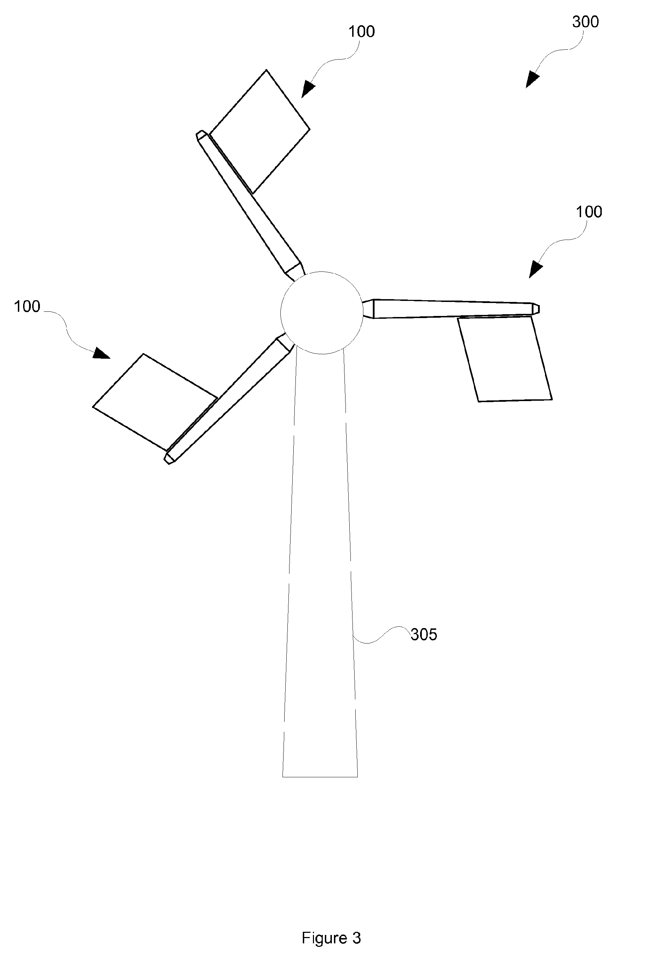

Referring again to figure 1, in a preferred embodiment, the flap 110 is located substantially at a trailing edge of the blade portion 105. Referring now to figure 3, there is shown a wind turbine 300 comprising a plurality of blades 100 and a base 305. Referring to the figure, the rotor is adapted to rotate in an anti-clockwise manner such that the flaps 110 trail the blade portions 105.

It should be noted that in differing embodiments, the height of the base 305 may vary depending on the application. Where the blade 100 advantageously adapts the wind turbine for use in low wind velocity application, the base 305 need not be as high as conventional bases.

However, it should be noted that in other embodiments, the flap 110 may be located at other locations with respect to the blade portion 105. Specifically, the flap 110 may be located at the leading edge of the blade portion 105. Alternatively, the flap 110 may be adapted to extend outwardly from the blade portion 105 thereby effectively varying the length of the blade 100.

As described above, in a preferred embodiment, the flap naturally tends towards the second position 210 with increased wind force.

However, in other embodiments, the blade 100 may further comprise an actuator (not shown) for positioning the flap 110. In this regard, the actuator would position the flap 110 in the second position given a second position 210, or second position 215 as given in figure 2. The actuator may comprise suitable leavers, hydraulic rams or the like so as to position the flap 110 accordingly.

In one embodiment, the wind turbine 300 comprises a controller for controlling the position of the flap 110. In this manner, the actuator would comprise a control interface for receiving control instructions from the controller. In a preferred embodiment, the controller comprises a computer, such as by way of microprocessor or the like, the computer adapted for monitoring environmental variables so as to control the position of the flap 110 in accordance with a control regime. In this regard, the controller may be adapted to measure environmental conditions including wind velocity, blade 100 rotational velocity and the like.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the above description of example embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description of Specific Embodiments are hereby expressly incorporated into this Detailed Description of Specific Embodiments, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

In the description provided herein, numerous specific details are set forth. However, it is understood that embodiments of the invention may be practiced without these specific details. In other instances, well-known methods, structures and techniques have not been shown in detail in order not to obscure an understanding of this description.

In describing the preferred embodiment of the invention illustrated in the drawings, specific terminology will be resorted to for the sake of clarity. However, the invention is not intended to be limited to the specific terms so selected, and it is to be understood that each specific term includes all technical equivalents which operate in a similar manner to accomplish a similar technical purpose. Terms such as "forward", "rearward", "radially", "peripherally", "upwardly", "downwardly", and the like are used as words of convenience to provide reference points and are not to be construed as limiting terms.

In the claims which follow and in the preceding description of the invention, except where the context requires otherwise due to express language or necessary implication, the word "comprise" or variations such as "comprises" or "comprising" are used in an inclusive sense, i.e. to specify the presence of the stated features but not to preclude the presence or addition of further features in various embodiments of the invention.

Any one of the terms: including or which includes or that includes as used herein is also an open term that also means including at least the elements/features that follow the term, but not excluding others. Thus, including is synonymous with and means comprising.

Thus, while there has been described what are believed to be the preferred embodiments of the invention, those skilled in the art will recognize that other and further modifications may be made thereto without departing from the spirit of the invention, and it is intended to claim all such changes and modifications as fall within the scope of the invention. For example, any formulas given above are merely representative of procedures that may be used. Functionality may be added or deleted from the block diagrams and operations may be interchanged among functional blocks. Steps may be added or deleted to methods described within the scope of the present invention.

Although the invention has been described with reference to specific examples, it will be appreciated by those skilled in the art that the invention may be embodied in many other forms.

It is apparent from the above, that the arrangements described are applicable to the wind turbine industries.

## Claims

1. A blade for a wind turbine, the blade having a dynamic effective cross-section in use.

2. A blade as claimed in claim 1, wherein the blade is configurable in a first configuration having a first cross-section and a second configuration having a second cross-section wherein the first cross-section is greater than the second cross-section.

3. A blade as claimed in claim 2, wherein the blade comprises a blade portion and a flap, and wherein the flap is adapted for being positioned with respect to the blade portion in a first position in the first configuration and a second position in the second configuration.

4. A blade as claimed in claim 3, wherein the first position and the second position differ in angle.

5. A blade as claimed in claim 3, wherein the first position and the second position differ in extension.

6. A blade as claimed in claim 3, wherein the flap is biased towards the first position.

7. A blade as claimed in claim 6, wherein the flap is biased by means of a spring.

8. A blade as claimed in claim 3, wherein the blade portion is hingedly coupled to the flap.

9. A blade as claimed in claim 8, further comprising a live hinge between the blade portion and the flap.

10. A blade as claimed in claim 6, wherein, in use, the flap tends towards the second position at increased wind velocity.

11. A blade as claimed in claim 1, wherein the flap is located substantially at a trailing edge of the blade portion.

12. A blade as claimed in claim 1, further comprising an actuator for positioning the flap.

13. A blade as claimed in claim 12, further comprising a control interface operably coupled to the actuator.

14. A wind turbine comprising at least one blade having a dynamic effective cross-section in use.

15. A wind turbine as claimed in claim 14, wherein the at least one blade comprises an actuator for configuring the cross-section of the blade in use.

16. A wind turbine as claimed in claim 15, further comprising a controller operably coupled to the actuator.

17. A wind turbine as claimed in claim 16, wherein the controller is adapted to measure wind velocity.

18. A wind turbine as claimed in claim 16, wherein the controller is adapted to measure rotational velocity.
